# EUROPÄISCHE PATENTANMELDUNG

(11) **EP 2 924 290 A2**
(43) Veröffentlichungstag der Anmeldung: **30.09.2015**
(21) Anmeldenummer: 14196457.7
(22) Anmeldetag: 05.12.2014
(51) Int. Cl.: F04B 53/14

(54) **Kolbenpumpenvorrichtung**

(30) Priorität: 16.12.2013 DE 102013226129
(71) Anmelder: SKF Lubrication Systems Germany GmbH, 69190 Walldorf (DE)
(72) Erfinder: Schmidt, Fabian, 14979 Großbeeren (DE); Kreutzkämper, Jürgen, 74915 Waibstadt-Daisbach (DE); Schmidt, Holger, 14532 Klein-Manchow (DE)
(74) Vertreter: Kuhstrebe, Jochen

(57) **Zusammenfassung**

Vorliegende Erfindung betrifft eine Kolbenpumpenvorrichtung (1), insbesondere für eine Schmiermittelpumpe, mit einem Doppelkolben (8), der einen Arbeitskolben (8a) und einen Förderkolben (8b) aufweist, die über eine Kolbenstange (20) miteinander verbunden sind, wobei der Arbeitskolben (8a) dichtend in einem ersten Gehäuseteil (10) und der Förderkolben (8b) dichtend in einem zweiten Gehäuseteil (12) angeordnet sind, so dass Arbeitskolben (8a) und erster Gehäuseteil (10) einen Arbeitsraum (16) für ein Arbeitsmedium und Förderkolben (8b) und zweites Gehäuseteil (12) einen Förderraum (34) für ein Fördermedium definieren, wobei der Arbeitskolben (8a) eine taschenförmige Umstülpung (22) aufweist, die derart ausgebildet ist, dass das zweite Gehäuseteil (10; 12) von dem Arbeitskolben (8a) zumindest teilweise umfassbar ist, sowie eine Schmiermittelpumpe (100) mit einer derartigen Kolbenpumpenvorrichtung (1).

## Beschreibung

Vorliegende Erfindung betrifft eine Kolbenpumpenvorrichtung, insbesondere für eine Schmiermittelpumpe mit einem Doppelkolben, der einen Arbeitskolben und einen Förderkolben aufweist, die über eine Kolbenstange miteinander verbunden sind, wobei der Arbeitskolben dichtend in einem ersten Gehäuseteil und der Förderkolben dichtend in einem zweiten Gehäuseteil angeordnet sind, so dass Arbeitskolben und erstes Gehäuseteil einen Arbeitsraum für ein Arbeitsmedium und Förderkolben und zweites Gehäuseteil einen Förderraum für ein Fördermedium definieren.

Bei den aus dem Stand der Technik bekannten Kolbenpumpenvorrichtungen mit einem Doppelkolben, der einen Förderkolben und einen Arbeitskolben umfasst, wird üblicherweise ein zu förderndes Medium mittels des Förderkolbens aus einem Vorratsbehälter über Unterdruckerzeugung angesaugt und dann mithilfe eines auf den Arbeitskolben ausgeübten Drucks komprimiert und in Richtung eines Fördermediumauslasses transportiert. Derartige Kolbenpumpenvorrichtungen werden insbesondere bei Schmiermittelpumpen eingesetzt. Dabei entstehen sowohl an dem Arbeitskolben, als auch an dem Förderkolben hohe Drücke, so dass sowohl die Form als auch das Material der Kolbenpumpenvorrichtung auf sehr hohe Drücke ausgelegt werden muss. Aus diesem Grund sind Kolbenpumpenvorrichtungen aus Stahl oder einem formstabilen Metall gefertigt.

Nachteilig an diesen bekannten Kolbenpumpen ist jedoch, dass der Doppelkolben axial eine große Länge aufweist, so dass die gesamte Kolbenpumpenvorrichtung sehr groß baut. Aufgabe vorliegender Erfindung ist es deshalb eine Kolbenpumpenvorrichtung bereitzustellen, die wenig Bauraum beansprucht.

Diese Aufgabe ist durch eine Kolbenpumpenvorrichtung gemäß Patentanspruch 1 sowie eine Schmiermittelpumpe gemäß Patentanspruch 14 gelöst.

Erfindungsgemäß wird eine Kolbenpumpenvorrichtung, insbesondere für eine Schmiermittelpumpe, mit einem Doppelkolben, der einen Arbeitskolben und einen Förderkolben auf-weist, die über eine Kolbenstange miteinander verbunden sind, bereitgestellt. Dabei sind der Arbeitskolben dichtend in einem ersten Gehäuseteil und der Förderkolben dichtend in einem zweiten Gehäuseteil angeordnet, so dass Arbeitskolben und erster Gehäuseteil einen Arbeitsraum für ein Arbeitsmedium und Förderkolben und zweites Gehäuseteil einen Förderraum für ein Fördermedium definieren. Dabei basiert die Idee der Erfindung darauf, dass der Arbeitskolben eine taschenförmige Umstülpung aufweist, die derart ausgebildet ist, dass das zweite Gehäuseteil von dem Arbeitskolben zumindest teilweise umfassbar ist. Aufgrund dieser erfindungsgemäßen taschenförmigen Umstülpung kann die gesamte Kolbenpumpenvorrichtung kompakter, insbesondere axial kompakter, aufgebaut werden, da Arbeitskolbenbereich und Förderkolbenbereich ineinander verschachtelt angeordnet sind.

Durch die erfindungsgemäße Umstülpung kann zudem sichergestellt werden, dass auch bei der erfindungsgemäßen kompakten Ausgestaltung der Kolbenpumpenvorrichtung eine ausreichend große Arbeitskolbenfläche bereitgestellt ist. Dies ist notwendig, um den Druck des Arbeitsmediums auf eine möglichst große Fläche zu verteilen, so dass trotz des hohen zum Fördern des Fördermediums benötigten Drucks die Druckbelastung auf den Arbeitskolben gemäßigt bleibt. Da die Fläche des Förderkolbens deutlich kleiner ist als die Fläche des Arbeitskolbens, kann über den Förderkolben ein entsprechend höherer Druck auf das Fördermedium übertragen werden.

Für die erfindungsgemäße kompakte Ausgestaltung ist zudem vorteilhaft, wenn das zweite Gehäuseteil an einem unteren Totpunkt des Förderkolbens fast vollständig in der taschenförmigen Umstülpung des Arbeitskolbens aufgenommen ist. Dadurch kann eine maximale axiale Längeneinsparung erreicht werden.

Gemäß einem weiteren vorteilhaften Ausführungsbeispiel ist der Doppelkolben topfförmig ausgebildet, wobei vorzugsweise der Topfboden als Förderkolben, der Topfrand als Arbeitskolben und die Topfwand als Kolbenstange ausgebildet ist. Dabei zeigt der Topfrand vorzugsweise die taschenförmige Umstülpung, so dass sich der Topfrand bis über die Topfwand in Richtung Topfboden erstreckt. Dadurch wird eine große Stabilität des Arbeitskolbens erreicht. Da zudem die Kolbenstange aufgrund der Topfform hohl ist, kann Gewicht eingespart werden, da keine massiven Kolbenelemente verwendet werden. Des Weiteren kann der hohle Bereich der Kolbenstange als Arbeitsraum für ein Arbeitsmedium zur Verfügung stehen, wodurch eine große Wirkfläche für das Arbeitsmedium und damit für die Kolbenpumpenvorrichtung bereitgestellt ist.

Zudem ermöglicht die Topfform, dass auch der Förderkolben aus einem Material gefertigt werden kann, das nicht übermäßig starke Druckbelastungen aushalten muss, da der vom Arbeitsmedium vom Arbeitsmedium ausgeübte Druck von innen direkt auf den Förderkolben wirkt und diesen dadurch stabilisiert. Dadurch ist es insbesondere möglich, auch für den Kolben ein Kunststoffmaterial oder eine leichtes aber weiches Metall zu verwenden.

Das bedeutet gleichzeitig, dass der Doppelkolben nicht mehr als massives Stahlbauteil gefertigt werden muss, so dass Gewicht eingespart werden kann.

Gemäß einem weiteren vorteilhaften Ausführungsbeispiel ist der erste Gehäuseteil nicht wie aus dem Stand der Technik bekannt, mittels eines Deckels verschlossen, um einen Arbeitsraum für den Arbeitskolben bereitzustellen, sondern von einem Außengehäuse umschlossen. Das bedeutet gleichzeitig, dass erstes und zweites Gehäuseteil Teil eines Innengehäuses sind, das von dem Außengehäuse umschlossen wird. Dabei ist insbesondere vorteilhaft, wenn außerdem zwischen erstem Gehäuseteil und Außengehäuse ein Ringraum verbleibt, der vorzugsweise mit dem Arbeitsraum verbunden ist. Eine derartige erfindungsgemäße Ausgestaltung ermöglicht es, zum einen den Arbeitsmediumzugang auf der gleichen Seite anzuordnen wie den Fördermitteleinlass bzw. -auslass, zum anderen ermöglicht ein das erste Gehäuseteil umschließendes Außengehäuse, dass auch bei der erfindungsgemäßen Ausgestaltung der Kolbenpumpenvorrichtung der Arbeitsraum für das Arbeitsmedium ausreichend groß gewählt werden kann.

Gemäß einem weiteren vorteilhaften Ausführungsbeispiel ist auf der dem Arbeitsraum abgewandten Seite des Arbeitskolbens ein von Arbeitskolben, erstem Gehäuseteil, zweitem Gehäuseteil und Kolbenstange begrenzter Luftraum ausgebildet ist, der einen im Wesentlichen einem Umgebungsluftdruck entsprechenden Luftdruck aufweist. Dabei ist vorzugsweise eine Entlüftungseinrichtung zwischen Luftraum und Umgebung vorgesehen ist. Dieser Luftraum wird bei Verfahren des Doppelkolbens von einem oberen Totpunkt zu einem unteren Totpunkt verkleinert und bildet im Wesentlichen den Raum, in den der Arbeitskolben verfahren kann. Um keinen Gegendruck im Luftraum auf den Arbeitskolben auszuüben, ist die erfindungsgemäße Entlüftung vorgesehen, so dass auch beim Verfahren des Doppelkolbens zu seinem unteren Totpunkt kein Gegendruck aufgrund von komprimierter Luft entstehen kann.

Vorzugsweise ist in dem Luftraum eine Rückstellfeder vorgesehen, deren Federkraft einer Kraftwirkung des Arbeitsmediums auf den Arbeitskolben entgegengesetzt ist. Aufgrund der Rückstellfeder kann der Doppelkolben in seine ursprüngliche Position zurückgestellt werden, sobald er nicht mehr mit Arbeitsmedium druckbeaufschlagt ist. Dadurch wird auch der Förderkolben wieder in seine ursprüngliche Position verfahren, wobei ein im Förderraum entstehender Unterdruck dazu verwendet wird, Fördermedium aus dem Vorratsbehälter in den Förderraum zu transportieren. Aufgrund der Entlüftung des Federraums bzw. des Luftraums entsteht außerhalb des Förderraums jedoch kein Unterdruck, so dass die Feder nur gegen den Arbeitskolben und den im Förderraum herrschenden Unterdruck wirken muss.

Gemäß einem weiteren vorteilhaften Ausführungsbeispiel ist der Förderraum der Kolbenpumpenvorrichtung zumindest mit einem Fördermediumeinlass ausgestattet, der mit einem Fördermediumvorratsbehälter verbindbar ist und weist weiterhin einen Fördermediumauslass auf, der dazu ausgelegt ist, Fördermedium für einen Verbraucher bereitzustellen. Dabei kann vorteilhafterweise an Fördermediumeinlass und/oder Fördermediumeinlass eine Ventilanordnung vorgesehen sein, die derart ausgestaltet ist, dass bei Unterdruck im Förderraum, also bei einer Sogwirkung, Fördermedium aus dem Vorratsbehälter über den Fördermediumeinlass in den Förderraum eingebracht werden kann, bei Aufbringen eines Drucks auf das Fördermedium im Förderraum mittels des Kolbens jedoch der Fördermediumeinlass verschlossen ist. Dies kann beispielsweise über mindestens ein entsprechend angeordnetes Rückschlagventil erreicht werden, das dafür sorgt, dass Fördermedium nicht in den Vorratsbehälter zurückströmt bzw. Fördermedium von einem Verbraucher zurückgesaugt wird. Gleichzeitig kann vorgesehen sein, dass Fördermedium erst nach Erreichen eines bestimmten Förderdrucks, der über ein Zustellen des Förderkolbens aufgebaut wird, aus dem Förderraum austreten kann. Dabei kann weiterhin ein Druckschalter vorgesehen sein, der einen Druck des Fördermediums überwacht.

Dabei ist vorteilhafterweise die Ventilanordnung dazu ausgelegt, den Fördermediumeinlass mittels eines Rückschlagventils zu verschließen, und den Fördermediumauslass erst ab einem bestimmten Fördermediumdruck zu öffnen.

Vorzugsweise wird als Arbeitsmedium Druckluft oder ein Hydraulikfluid verwendet und/oder als Fördermittel ein Schmiermittel. Da Schmiermittel insbesondere bei Nutzfahrzeugen und Baumaschinen an verschiedene Verbraucher geführt werden muss, weisen derartige Maschinen oft eigene Schmiermittelpumpen auf. Gleichzeitig sind viele Elemente bei Nutzfahrzeugen bzw. Baumaschinen hydraulisch oder pneumatisch betrieben, so dass Druckluft bzw. Hydraulikfluid als Arbeitsmedium bereits bereitsteht.

Die erfindungsgemäße Ausgestaltung des Kolbens ermöglicht eine deutliche Gewichteinsparung im Vergleich zu den massiven Kolbenvorrichtungen aus dem Stand der Technik. Gleichzeitig ermöglicht die erfindungsgemäße Ausgestaltung des Kolbens auch, den Kolben bzw. die Gehäuse aus Kunststoff zu fertigen, so dass eine weitere Gewichtseinsparung möglich ist.

Dabei ist insbesondere vorteilhaft, den Doppelkolben und/oder das erste und/oder das zweite Gehäuseteil aus einem unverstärkten Kunststoff, insbesondere aus Polyamid oder einem Polyamid enthaltenden Kunststoff, aus Polyoxymethylen oder einem Polyoxymethylen enthaltenden Kunststoff, oder aus Polypropylen oder einem Polypropylen enthaltenden Kunststoff, zu fertigen. Diese Kunststoffe haben dabei den Vorteil, zum einen vergleichsweise stabil zu sein und auch großen Drücken standhalten zu können, zum anderen bildet es eine im Wesentlichen glatte Oberfläche aus, so dass eine Dichtung zwischen dem Arbeitskolben und dem Förderkolben und den sie umgebenden ersten und zweiten Gehäuseteil erreicht werden kann. Ihre etwaige geringere Steifigkeit gegenüber Drücken kann über den oben beschriebenen erfindungsgemäßen Ringraum stabilisiert werden.

Da aber nicht nur das erste Gehäuseteil, sondern im Förderraum über das vom Förderkolben komprimierte Fördermedium auch das zweite Gehäuseteil hohen Drücken ausgesetzt ist, ist es vorteilhaft, das zweite Gehäuseteil ebenfalls zu stabilisieren. Dazu kann vorteilshafterweise einer Stabilisierungshülse vorgesehen sein, die den zweiten Gehäuseteil vorzugsweise außen umgibt. Dabei kann die Stabilisierungshülse vorzugsweise aus einem Metall oder dünnem Blech gefertigt sein. Statt eines Metalls kann auch hier ein Kunststoff, insbesondere ein verstärkter Kunststoff, zum Einsatz kommen.

Das Außengehäuse dagegen kann ebenfalls aus einem Kunststoff, insbesondere ine verstärkten, vorzugsweise einem glasfaserverstärkten, Kunststoff gefertigt sein, der auf die zu erwartenden Drücken ausgelegt ist. Verstärkte, insbesondere glasfaserverstärkte, Kunststoffe zeichnen sich durch eine besonders hohe Formstabilität aus. Da jedoch gerade ein glasfaserverstärkter Kunststoff keine glatte Oberfläche ausbildet, ist die Verwendung des glasfaserverstärkten Kunststoffes für das Innengehäuse trotz der erhöhten Stabilität nicht vorteilhaft, da dann eine zwischen Arbeitskolben und erstem Gehäuseteil bzw. zwischen Förderkolben und zweitem Gehäuseteil angeordnete Dichtung zu schnell verschleißen würde bzw. eine Dichtung zwischen Kolbenabschnitt und Gehäuseteil nicht möglich ist.

Ein weiterer Aspekt vorliegender Erfindung betrifft eine Schmiermittelpumpe mit einem Gehäuse, das einen Vorratsbehälter für Schmiermittel und einen eine Pumpeneinheit, insbesondere eine Kolbenpumpeneinheit, umfassenden Bodengehäuseabschnitt aufweist, wobei die Pumpeneinheit dazu ausgelegt ist, ein Schmiermittel aus dem Vorratsbehälter an einen am Gehäuse angeordneten Schmiermittelauslass zu fördern, wobei die Pumpeneinheit als Kolbenpumpenvorrichtung, wie oben beschrieben, ausgebildet ist.

Weitere Vorteile und vorteilhafte Ausführungsbeispiele sind in der Beschreibung, den Zeichnungen und den Ansprüchen definiert.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1:: eine schematische Explosionsdarstellung einer erfindungsgemäßen Schmiermittelpumpe;
- Fig. 2:: eine schematische Schnittansicht durch die in Fig. 1 dargestellte Kolbenpumpenvorrichtung entlang der Schnittlinie A-A;
- Fig. 3:: eine Schnittansicht durch die in Fig. 1 dargestellte Kolbenpumpenvorrichtung entlang einer Schnittlinie B-B;
- Fig. 4:: eine Schnittansicht durch die in Fig. 1 dargestellten Kolbenpumpenvorrichtung mit Gehäuse entlang einer Schnittlinie C-C; und
- Fig. 5:: eine schematisch Aufsicht auf einen Pumpengehäusebodenabschnitt.

Im Folgenden werden gleiche oder funktionell gleichwirkende Elemente mit den gleichen Bezugszeichen gekennzeichnet.

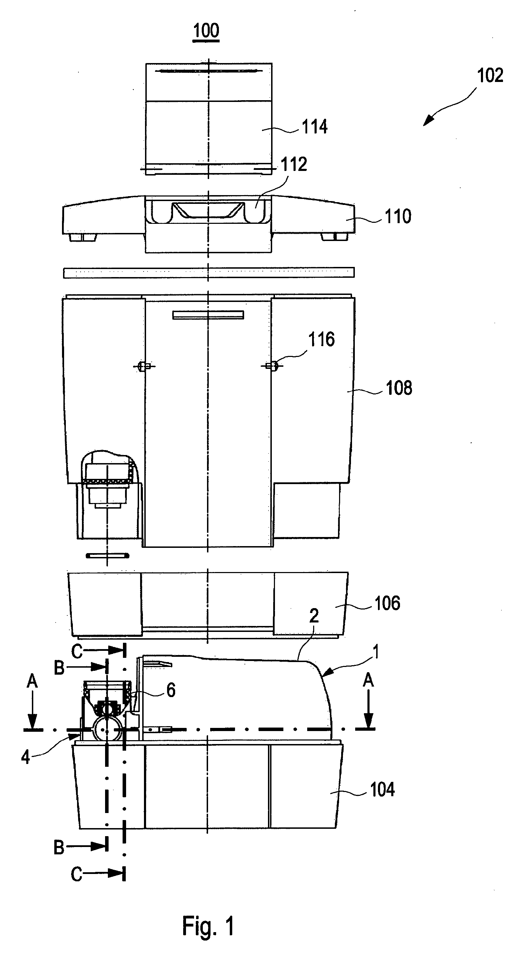

Fig. 1 zeigt eine schematische Explosionsdarstellung einer erfindungsgemäßen Schmiermittelpumpe 100 mit einem Gehäuse 102, das aus mehreren Teilen, unter anderem einem Pumpengehäusebodenabschnitt 104, einem Pumpengehäusedeckelabschnitt 106, einem Vorratsbehälter 108 und einem Vorratsbehälterdeckel 110 aufgebaut ist. Wie weiterhin Fig. 1 zu entnehmen, ist in dem Pumpengehäusebodenabschnitt 104 eine Kolbenpumpenvorrichtung 1 angeordnet auf die im Folgenden genauer eingegangen wird. Der Vorratsbehälter 108 dient zur Aufnahme eines Fördermediums, insbesondere von Schmiermittel, und wird über eine an der Oberseite des Vorratsbehälterdeckels 110 ausgebildete Einfüllöffnung 112 mit Fördermedium/Schmiermittel befüllt. Dabei ist die Einfüllöffnung 112 mittels eines Deckelelements 114 abgedeckt, wobei das Deckelelement 114 an Scharnieren 116 an einer Vorderseite des Vorrastbehälters 108 angeordnet ist.

Weiterhin zeigt Fig. 1, dass die Kolbenpumpenvorrichtung 1 selbst in einem Außengehäuse 2 aufgenommen ist, und neben der Kolbenpumpenvorrichtung 1 eine Ventilanordnung 4 angeordnet ist. Um das Fördermedium, insbesondere das Schmiermittel, aus dem Vorratsbehälter 108 in die Kolbenpumpenvorrichtung 1 zu bringen, ist weiterhin ein Fördermediumeinlassstutzen 6 vorgesehen, der mit dem Vorratsbehälter 108 verbindbar ist und über den, wie weiter unten genauer beschrieben wird, Fördermedium in einen Förderraum der Kolbenpumpenvorrichtung 1 gesaugt wird.

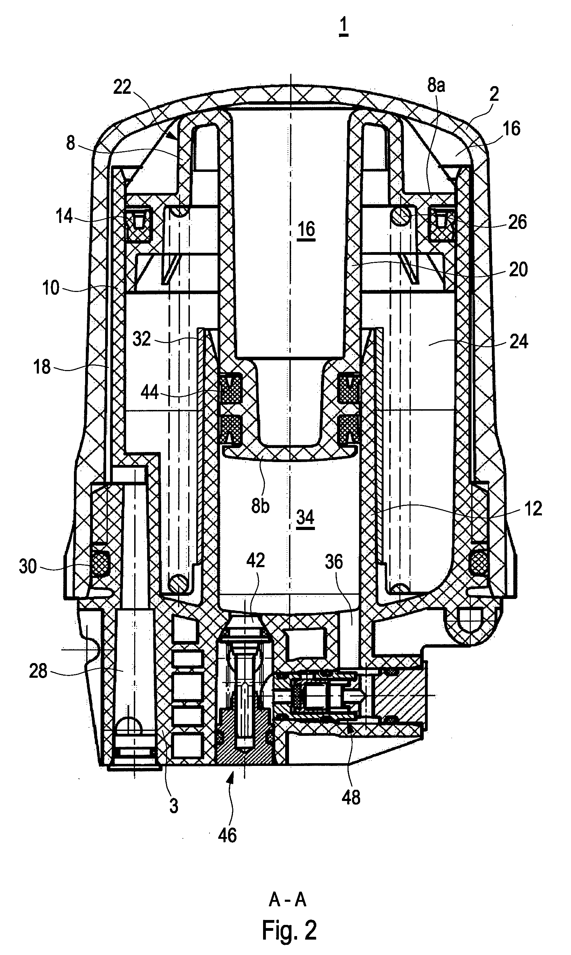

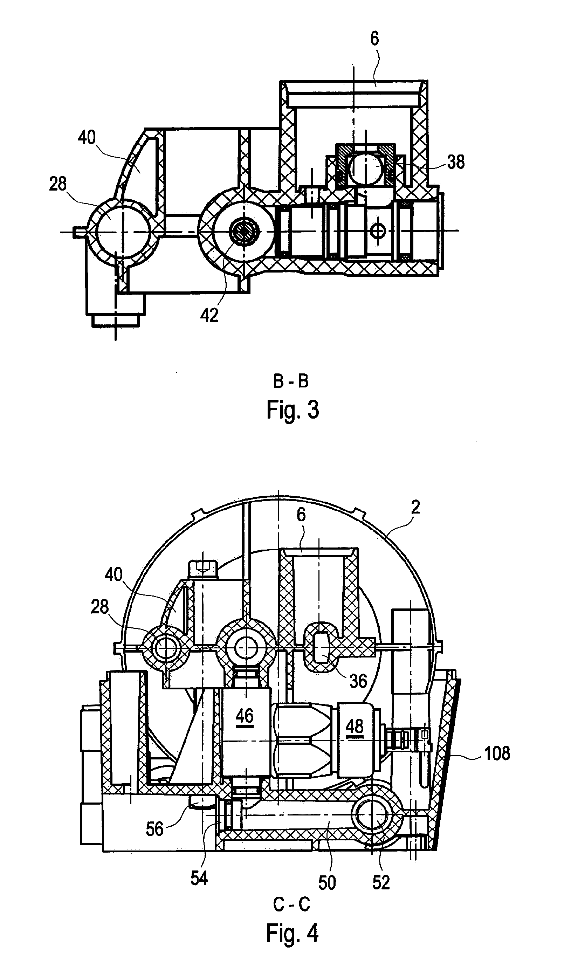

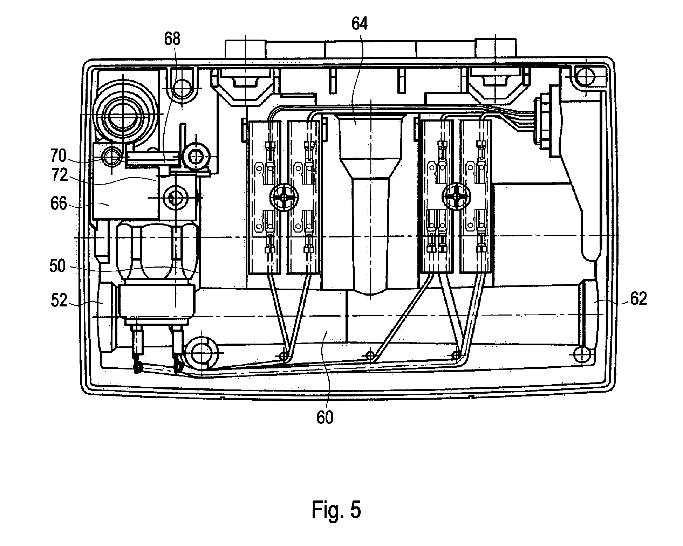

Im Folgenden wird insbesondere auf die Kolbenpumpenvorrichtung 1 eingegangen, wobei die Figuren 2 und 3, nur die Kolbenpumpenvorrichtung, die Figuren 4 und 5, die Kolbenpumpenvorrichtung 1 im Pumpengehäusebodenabschnitt 104 zeigen.

Dabei stellt Fig. 2 die Schnittansicht entlang der Linie A-A dar, während Fig. 3 eine Schnittansicht entlang der Linie B-B ohne Pumpengehäusebodenabschnitt 104 zeigt.

Wie der Schnittansicht aus Fig. 2 entnommen werden kann, weist die Kolbenpumpenvorrichtung 1 ein in dem Außengehäuse 2 aufgenommenes Innengehäuse 3 auf, das mittels Dichtungen 30 gegen das Außengehäuse 2 abgedichtet ist. In dem Innengehäuse 30 ist wiederum ein Kolben 8 angeordnet, der als Doppelkolben mit einem Arbeitskolben 8a und einem Förderkolben 8b ausgebildet ist. Dabei liegt der Arbeitskolben 8a dichtend an einem ersten Gehäuseteil 10 des Innengehäuses 3 an, während der Förderkolben 8b in einem zweiten Gehäuseteil 12 des Innengehäuses 3 aufgenommen ist. Dazu weist der Arbeitskolben 8a an seinem radial äußeren Rand Dichtungselemente 14 auf, die den Arbeitskolben 8a an dem ersten Gehäuseteil 10 dichtend anliegen lassen, so dass zwischen dem Arbeitskolben 8a, dem ersten Gehäuseteil 10 und dem Außengehäuse 2 ein Arbeitsraum 16 für ein Arbeitsmedium bereitgestellt ist. Dabei zeigt Fig. 2, dass der Arbeitsraum 16 sich nicht nur rechts und links von dem Kolben 8 erstreckt, sondern aufgrund der erfindungsgemäßen im Wesentlichen topfförmigen Ausformung des Doppelkolbens 8 mit einer hohlen Kolbenstange 20 sich auch in den Hohlraum der Kolbenstange 20 erstreckt. Dadurch kann der Druck des Arbeitsmediums auch direkt auf den Förderkolben 8b übertragen werden, so dass die Druckverteilung am Doppelkolben verbessert ist.

Zudem weist der Doppelkolben 8 erfindungsgemäß im Bereich des Arbeitskolbens, eine Umstülpung 22 auf, die für eine erhöhte Stabilität des Doppelkolbens 8 sorgt und eine Angriffsfläche für das Arbeitsmedium am Arbeitskolben vergrößert, wodurch die Druckbelastung auf den Arbeitskolben verringert werden kann. Weiterhin ist der Doppelkolben 8, wie oben bereits erwähnt, im Wesentlichen topfförmig ausgebildet, mit einer als Topfwand ausgebildeten Kolbenstange 20, einem als Topfboden ausgebildeten Förderkolben 8b und einem als Topfrand ausgebildeten Arbeitskolben 8a. Dabei ist der Topfrand des Förderkolbens 8a vorzugsweise mit der oben beschriebenen Umstülpung 22 ausgebildet. Da weiterhin auch im Topfinneren, also in der hohlen Kolbenstange 20, wie bereits oben beschrieben, der Arbeitsdruck des Arbeitsmediums herrscht, kann der Druck des Arbeitsmediums direkt auf den Förderkolben 8b wirken. Des Weiteren ermöglicht die erfindungsgemäße Umstülpung 22, dass die Kolbenpumpenvorrichtung 1 eine besonders kompakte Ausbildung aufweist, da in der Umstülpung 22 das zweite Gehäuseteil 12 zumindest teilweise aufnehmbar ist.

Aufgrund der erfindungsgemäßen Ausgestaltung des Doppelkolbens 8 mit Umstülpung 22 bzw. der Topfform mit der daraus resultierenden hohlen Kolbenstange 20 kann auf einen massiven und schweren Stahldoppelkolben verzichtet werden. Selbst wenn Stahl weiterhin als Material für den Doppelkolben 8 verwendet wird, so ist durch die hohle Ausgestaltung der Kolbenstange 20 dennoch eine signifikante Gewichteinsparung möglich. Gleichzeitig eröffnet sich auch die Möglichkeit, andere Materialien, wie beispielsweise ein leichtes aber weiches Metall oder sogar Kunststoff, zu verwenden.

Weiterhin kann man Fig. 2 entnehmen, dass zwischen dem Außengehäuse 2 und dem ersten Gehäuseabschnitt 10 ein Ringraum 18 verbleibt, der ebenfalls mit dem Arbeitsraum 16 zusammenwirkt. Über diesen erfindungsgemäßen Ringraum 18 wird das Gehäuseteil 10 zumindest im Bereich des Arbeitsraums 16 von allen Seiten mit Druck beaufschlagt, so dass die Stabilität des ersten Gehäuseteils 10 verstärkt wird.

Diese erfindungsgemäßen Ausgestaltungen ermöglichen es, den Doppelkolben 8 und/oder das ersten und/oder das zweite Gehäuseteil 10; 12 aus einem weniger druckstabilen Material als Stahl zu fertigen. Insbesondere ist eine Herstellung aus einem Kunststoff möglich.

Dabei ist insbesondere bevorzugt, das Außengehäuse 2 aus einem verstärkten, insbesondere glasfaserverstärkten Kunststoff auszubilden, während das erste und/oder zweite Gehäuseteil 10; 12 aus einem unverstärkten Kunststoff, wie beispielsweise aus Polyamid, Polyoxymethylen, Polypropylen oder ähnlichen Kunststoffen hergestellt werden können. Diese Kunststoffe haben den Vorteil, dass die daraus gefertigten Wände sehr glatt und damit optimal für die Dichtung 14 des Arbeitskolbens und eine Dichtung 44 am Förderkolben 8b ausgestaltet werden können, während das glasfaserverstärkte Außengehäuse 2 zwar keine glatten Wände aufweist, aber dafür besonders großen Drücken statthalten kann. Die mangelnde Stabilität des unverstärkten Kunststoffs des ersten Gehäuseteils 10 kann dabei über den erfindungsgemäßen Ringraum 18 kompensiert werden. Das zweite Gehäuseteil 12 kann dagegen mit einer Stabilisierungshülse 32 umgeben sein. Diese Stabilisierungshülse 32 kann beispielsweise aus einem dünnen Metall oder einem Blech gefertigt sein, es ist jedoch auch möglich, wie für das Außengehäuse 2, einen Kunststoff, insbesondere einen glasfaserverstärkten Kunststoff, zu verwenden. Dabei sind üblicherweise erstes und zweites Gehäuseteil aus demselben Material gefertigt, da das Innengehäuse als zusammenhängendes Bauteil ausgebildet ist. Dennoch ist vorstellbar, erstes und zweites Gehäuseteil als separate Bauteile auszubilden.

Weiterhin zeigt Fig. 2, dass auf der dem Arbeitsraum 16 abgewandten Seite des Arbeitskolbens 8a ein Luftraum bzw. Federraum 24 verbleibt, in dem eine Rückstellfeder 26 angeordnet ist. Dabei ist der Federraum 24 gegenüber der Umgebung entlüftet, so dass im Federraum 24 und in der Umgebung im Wesentlichen der gleiche Druck herrscht. Dadurch kann beim Zustellen des Kolbens 8 im Federraum 24 kein Gegendruck aufgebaut werden, der dem Druck des Arbeitsmediums im Arbeitsraum 16 entgegenwirkt. Auf die Anordnung der Entlüftung wird weiter unten mit Bezug auf Fig. 3 eingegangen. Die Rückstellfeder 26 ermöglicht, dass der Kolben 8 von seinem unteren Totpunkt wieder zu seinem oberen Totpunkt rückgestellt werden kann.

Um Arbeitsmedium in den Ringraum 18 und weiter in den Arbeitsraum 16 einzuleiten, weist die Kolbenpumpenvorrichtung 1 weiterhin einen Arbeitsmediumzugang 28 auf. Dabei ist der Arbeitsmediumzugang 28 in dem Innengehäuse 3 ausgebildet und mündet in den zwischen dem Außengehäuse 2 und dem ersten Gehäuseteil 10 ausgebildeten Ringraum 18.

Wie Fig. 2 weiter zeigt, befindet sich der Förderkolben 8b an seinem oberen Totpunkt und bildet zwischen Förderkolben 8b und zweitem Gehäuseteil 12 einen Förderraum 34 aus, in den ein Fördermedium, insbesondere ein Schmiermittel, aus dem Vorratsbehälter 108 einbringbar ist. Dazu wird das Fördermedium über den Fördermediumeinlassstutzen 6 und die Ventilanordnung 4 zu einem Fördermediumeinlass 36 und von dort in den Förderraum 34 eingebracht. Die Ventilanordnung 4 weist dazu vorzugsweise ein Rückschlagventil 38 auf, das insbesondere in der Schnittansicht der Fig. 3 dargestellt ist.

Weiterhin zeigt die Schnittansicht von Fig. 3 eine mögliche Anordnung für die Entlüftung 40 des Federraums 24, die im dargestellten Beispiel in unmittelbarer Nähe des Arbeitsmediumzugangs 28 ausgebildet ist. Zudem ist in Fig. 3 ein Fördermediumauslass 42 dargestellt, auf den weiter unten noch genauer eingegangen wird.

Rückkehrend zu Fig. 2, zeigt die Figur weiterhin, dass der Förderkolben 8b über Dichtungen 44 dicht an dem zweiten Gehäuseteil 12 anliegt. Dadurch entsteht beim Verfahren des Kolbens 8 von einem unteren Totpunkt zu dem in Fig. 2 dargestellten oberen Totpunkt ein Unterdruck in dem Förderraum 34, der wiederum mit dem in dem Fördermediumeinlassstutzen 6 angeordneten Rückschlagventil 38 zusammenwirkt, so dass sich das Rückschlagventil 38 öffnet und den Fördermediumeinlass 36 mit dem Fördermediumeinlassstutzen 6 und damit mit dem Vorratsbehälter 108 fluidisch verbindet, so dass ein Eintritt des Fördermediums aus dem Vorratsbehälter 108 in den Förderraum 34 möglich ist.

Wird der Kolben 8 dagegen von seinem oberen Totpunkt in Richtung seines unteren Totpunkts bewegt, so schließt sich das Rückschlagventil 38, so dass kein Fördermedium in den Vorratsbehälter 108 zurückfließen kann. Für einen Auslass des Fördermediums aus dem Förderraum 34 ist an dem Fördermediumauslass 42 eine weitere Ventilanordnung 46 vorgesehen, die sich vorzugsweise abhängig von einem im Förderraum 34 herrschenden Druck des Fördermediums öffnet, den Fördermediumauslass 42 freigibt und ermöglicht, dass Fördermedium aus dem Förderraum 34 austreten kann. Weiterhin kann an der Ventilanordnung 46 ein Druckschalter 48 angeordnet sein, der einen im Förderraum 34 herrschenden Druck überwacht.

Der Einlass und der Auslass des Schmiermittels in die Kolbenpumpenvorrichtung 1 bzw. aus der Kolbenpumpenvorrichtung 1 wird insbesondere unter Bezugnahme auf die Fig. 4 und 5 deutlich. Fig. 4 zeigt dabei eine Schnittansicht der Kolbenpumpenvorrichtung 1 aus Fig. 1 entlang der Linie C-C, während Fig. 5 eine Aufsicht auf den Pumpengehäusebodenabschnitt 104 ohne Kolbenpumpenvorrichtung 1 zeigt.

Wie Fig. 4 zu entnehmen, ist der Fördermediumeinlassstutzen 6 fluidisch mit dem Fördermediumeinlass 36 verbunden. Nicht dargestellt ist in dieser Ansicht das Rückschlagventil 38, das nur bei einem im Förderraum 34 herrschenden Unterdruck sich öffnet. Neben dem Fördermediumeinlass 36 ist der Fördermediumauslass 42 dargestellt, der den Förderraum 34 mit der Ventilanordnung 46 verbindet.. Dabei wird die Ventilanordnung 46 derart geregelt, so dass erst ab einem bestimmten im Förderraum 34 herrschenden Druck Fördermedium aus dem Fördermediumauslass 42 treten kann. Dabei wird der Druck mit Hilfe des Druckschalters 48 überwacht. Ist der vorbestimmte Druck erreicht, öffnet sich die Ventilanordnung 46, so dass Schmiermittel in einen Fördermediumkanal 50 eintreten kann, der Teil des Pumpengehäusebodenabschnitts 104 ist. Der Fördermediumkanal 50 wiederum mündet in einen gehäuseseitigen Fördermediumauslass 52, der beispielsweise mit Zulaufleitungen zu einem Verbraucher verbindbar ist.

Weiterhin zeigt Fig. 4, dass konstruktionsbedingt der Fördermediumkanal 50 eine zweite mit einem Stopfen 54 verschlossene Öffnung aufweist. Dieser Stopfen 54 wird über ein Befestigungsmittel 56 in seiner Lage gesichert. Gleichzeitig dient das Befestigungsmittel 56 dazu, die Kolbenpumpenvorrichtung 1 in dem Pumpengehäusebodenabschnitt 104 zu befestigen.

Ein weiterer Aspekt der erfindungsgemäßen Kolbenpumpenvorrichtung 1 ist in Fig. 5 dargestellt. Dabei zeigt Fig. 5 eine Aufsicht auf den Pumpengehäusebodenabschnitt 104 ohne die Kolbenpumpenvorrichtung 1. Dabei ist wiederum der Druckschalter 48 zu sehen. Weiterhin kann der Fig. 5 entnommen werden, dass der Fördermediumkanal 50 sich nicht nur zu einem einzigen gehäuseseitigen Fördermediumauslass 52 hin verzweigt, sondern das Fördermedium über ein Kanalsystem 60 an zwei weitere Auslässe 62, 64 seitlich bzw. rückseitig des Pumpengehäusebodenabschnitts 104 verteilt werden kann. Weiterhin kann der Aufsicht aus Fig. 5 entnommen werden, dass das Befestigungsmittel 56 nicht nur dazu geeignet ist, die Kolbenpumpenvorrichtung 1 in dem Pumpengehäusebodenabschnitt 104 zu sichern, sondern gleichzeitig ein Halteelement 66 befestigt, das wiederum dazu ausgelegt ist, einen Füllstandsensor 68 in einer senkrechten Position zu sichern. Dazu weist das Halteelement 66 eine erste vertikale Kante 70 und eine zur ersten vertikalen Kante 70 im Wesentlichen senkrecht angeordnete zweite vertikale Kante 72 auf, die als Abstützelemente für den Füllstandsensor 68 dienen.

Insgesamt ermöglicht die in den Figuren dargestellte Ausgestaltung des Kolbens eine besonders kompakte Ausgestaltung der Kolbenpumpenvorrichtung. Zudem kann, um den hohen Druckanforderungen zu genügen, der Kolben erfindungsgemäß topfförmig ausgebildet sein und an seinem Topfrand eine Umstülpung aufweisen, die zum einen dem Kolben eine erhöhte Stabilität verleiht und zum anderen den zweiten Gehäuseteil zumindest teilweise aufnehmen kann, so dass möglich ist, die Kolbenpumpenvorrichtung besonders kompakt auszugestalten. Zudem ermöglicht der sich bis in das Innere der Kolbenstange erstreckende Arbeitsraum eine große Wirkung und eine weitere Stabilisierung des Kolbens. Des Weiteren erlaubt die erfindungsgemäße Ausgestaltung und auch die optionale Aufnahme des Innengehäuses, insbesondere des ersten Gehäuseteils, in einem Außengehäuse, wobei zwischen Außengehäuse und erstem Gehäuseteil ein Ringraum verbleibt, dass die Kolbenpumpenvorrichtung bzw. das erste und/oder zweite Gehäuseteil und/der der Doppelkolben aus Kunststoff fertigbar sind. Dadurch kann erreicht werden, dass die Kolbenpumpenvorrichtung insgesamt leichter ausgebildet ist und kostengünstiger hergestellt werden kann. Auch die Verwendung von einem verstärkten Kunststoff für das Außengehäuse, während das Innengehäuse aus einem unverstärkten Kunststoff bestehen, ist vorteilhaft. Dabei stabilisiert der erfindungsgemäße Ringraum, der zwischen Außengehäuse und erstem Gehäuseteil ausgebildet ist, den Kunststoff des ersten Gehäuseteils, so dass auch ein Einsatz als Hochdruckpumpe möglich ist. Um das zweite Gehäuseteil und damit die Führung für den Förderkolben zu stabilisieren, kann zudem das zweite Gehäuseteil in einer Hülse aufgenommen sein. All diese konstruktiven Merkmale ermöglichen es eine Kolbenpumpenvorrichtung bereitzustellen, die kompakter und leichter als die aus dem Stand der Technik bekannten Kolbenpumpen ist.

### Bezugszeichenliste

- 1: Kolbenpumpenvorrichtung
- 2: Außengehäuse
- 3: Innengehäuse
- 4: Ventilanordnung
- 6: Fördermediumeinlassstutzen
- 8: Doppelkolben
- 8a: Arbeitskolben
- 8b: Förderkolben
- 10: erster Gehäuseabschnitt
- 12: zweiter Gehäuseabschnitt
- 14: Dichtung
- 16: Arbeitsraum
- 18: Ringraum
- 20: Kolbenstange
- 22: Umstülpung des Kolbens
- 24: Luftraum/Federraum
- 26: Rückstellfeder
- 28: Arbeitsmediumzugang
- 30: Dichtung
- 32: Stabilisierungshülse
- 34: Förderraum
- 36: Fördermediumeinlass
- 38: Rückstellventil
- 40: Entlüftung
- 42: Fördermediumauslass
- 44: Dichtungen
- 46: Ventilanordnung
- 48: Druckschalter
- 50: Fördermediumkanal
- 52: gehäuseseitiger Fördermediumauslass
- 54: Stopfen
- 56: Befestigungsmittel
- 60: Schmiermittelverteilkanal
- 62, 64: gehäuseseitige Schmiermittelauslässe
- 66: Halteelement
- 68: Füllstandssensor
- 70, 72: Anschlagsfläche

- 100: Schmiermittelpumpe
- 102: Gehäuse
- 104: Pumpengehäusebodenabschnitt
- 106: Pumpengehäuseabdeckabschnitt
- 108: Vorratsbehälter
- 110: Vorratsbehälterabdeckung
- 112: Schmiermitteleinlassöffnung
- 114: Deckel
- 116: Scharnier

## Patentansprüche

1. Kolbenpumpenvorrichtung (1), insbesondere für eine Schmiermittelpumpe, mit einem Doppelkolben (8), der einen Arbeitskolben (8a) und einen Förderkolben (8b) aufweist, die über eine Kolbenstange (20) miteinander verbunden sind, wobei der Arbeitskolben (8a) dichtend in einem ersten Gehäuseteil (10) und der Förderkolben (8b) dichtend in einem zweiten Gehäuseteil (12) angeordnet sind, so dass Arbeitskolben (8a) und erster Gehäuseteil (10) einen Arbeitsraum (16) für ein Arbeitsmedium und Förderkolben (8b) und zweites Gehäuseteil (12) einen Förderraum (34) für ein Fördermedium definieren, **dadurch gekennzeichnet, dass** der Arbeitskolben (8a) eine taschenförmige Umstülpung (22) aufweist, die derart ausgebildet ist, dass das zweite Gehäuseteil (10; 12) von dem Arbeitskolben (8a) zumindest teilweise umfassbar ist.

2. Kolbenpumpenvorrichtung (1) nach Anspruch 1, wobei das zweite Gehäuseteil (12) an einem unteren Totpunkt des Förderkolbens (8b) in der taschenförmigen Umstülpung (22) des Arbeitskolben (8a)s aufgenommen ist.

3. Kolbenpumpenvorrichtung (1) nach Anspruch 1 oder 2, wobei der Doppelkolben (8) topfförmig ausgebildet ist, wobei vorzugsweise der Topfboden als Förderkolben (8b), der Topfrand als Arbeitskolben (8a) und die Topfwand als Kolbenstange (20) ausgebildet ist.

4. Kolbenpumpenvorrichtung (1) nach einem der vorhergehenden Ansprüche, wobei weiterhin ein Außengehäuse (2) vorgesehen ist, das erstes und zweites Gehäuseteil (10; 12) umschließt, so dass erstens und zweites Gehäuseteil (10; 12) ein Innengehäuse (3) ausbilden.

5. Kolbenpumpenvorrichtung (1) nach Anspruch 4, wobei zwischen erstem Gehäuseteil (10) und Außengehäuse (2) ein Ringraum (18) vorgesehen ist, der vorzugsweise mit dem Arbeitsraum (16) verbunden ist.

6. Kolbenpumpenvorrichtung (1) nach Anspruch 4 oder 5, wobei das Außengehäuse (2) aus Kunststoff, insbesondere einem verstärkten, vorzugsweise einem glasfaserverstärkten, Kunststoff, gefertigt ist.

7. Kolbenpumpenvorrichtung (1) nach einem der vorhergehenden Ansprüche, wobei auf einer dem Arbeitsraum (16) abgewandten Seite ein Arbeitsmediumzugang (28) angeordnet ist, der vorzugsweise mit dem Ringraum (18) verbunden ist.

8. Kolbenpumpenvorrichtung (1) nach einem der vorhergehenden Ansprüche, wobei auf der dem Arbeitsraum (16) abgewandeten Seite des Arbeitskolben (8a) ein von Arbeitskolben (8a), erstem Gehäuseteil (10), zweitem Gehäuseteil (12) und Kolbenstange (20) begrenzter Luftraum (24) ausgebildet ist, der einen im Wesentlichen einem Umgebungsluftdruck entsprechenden Luftdruck aufweist, wobei vorzugsweise eine Entlüftungseinrichtung(40) zwischen Luftraum (24) und Umgebung vorgesehen ist.

9. Kolbenpumpenvorrichtung (1) nach Anspruch 8, wobei in dem Luftraum (24) eine Rückstellfeder (26) vorgesehen ist, deren Federkraft einer Kraftwirkung des Arbeitsmediums auf den Arbeitskolben (8a) entgegengesetzt ist.

10. Kolbenpumpenvorrichtung (1) nach einem der vorhergehenden Ansprüche, wobei der Förderraum (34) zumindest einen Fördermediumeinlass (36), der mit einem Fördermediumvorratsbehälter (108) und einen Fördermediumauslass (42), der mit einem Fördermediumverbraucher verbindbar ist, aufweist.

11. Kolbenpumpenvorrichtung (1) nach Anspruch 10, wobei weiterhin eine Ventilanordnung (4; 38; 46) vorgesehen ist, mit der ein Öffnen und/oder Schließen des Fördermediumeinlasses (36) und/oder des Fördermediumauslasses (42) regelbar ist.

12. Kolbenpumpenvorrichtung (1) nach einem der vorhergehenden Ansprüche, wobei der Doppelkolben (8) und/oder das erste und/oder das zweite Gehäuseteil (10; 12) aus einem unverstärkten Kunststoff, insbesondere aus Polyamid oder einem Polyamid enthaltenden Kunststoff, aus Polyoxymethylen oder einem Polyoxymethylen enthaltenden Kunststoff, oder aus Polypropylen oder einem Polypropylen enthaltenden Kunststoff, gefertigt ist.

13. Kolbenpumpenvorrichtung (1) nach einem der vorhergehenden Ansprüche, wobei das zweite Gehäuseteil (10; 12), vorzugsweise außen, von einem Stabilisierungselement (32), insbesondere einer Hülse umgeben ist, wobei vorzugsweise das Stabilisierungselement (32) aus Metall oder Kunststoff, insbesondere einem verstärkten Kunststoff gefertigt ist.

14. Schmiermittelpumpe (100) mit einem Gehäuse (102) das einen Vorratsbehälter (108) für Schmiermittel und einen eine Pumpeneinheit (1) umfassenden Pumpengehäuseabschnitt (104, 106) aufweist, wobei die Pumpeneinheit (1) dazu ausgelegt ist ein Schmiermittel aus dem Vorratsbehälter (108) an einen am Gehäuse (102) angeordneten Schmiermittelauslass (52, 62, 64) zu fördern, **dadurch gekennzeichnet, dass** die Pumpeneinheit als Kolbenpumpenvorrichtung (1) nach einem der vorhergehenden Ansprüche ausgebildet ist.
